Europäisches Patentamt

European Patent Office

Office européen des brevets

(19)

(11) Publication number: **0 034 029**
**A2**

(12) **EUROPEAN PATENT APPLICATION**

(21) Application number: **81300410.8**

(22) Date of filing: **30.01.81**

(51) Int. Cl.³: **B 60 T 8/087**

(30) Priority: **07.02.80 GB 8004161**

(43) Date of publication of application: **19.08.81**
**Bulletin 81/33**

(84) Designated Contracting States: **DE FR IT**

(71) Applicant: **LUCAS INDUSTRIES LIMITED, Great King Street, Birmingham, B19 2XF (GB)**

(72) Inventor: **Wilson, Alexander John, 69 Darnick Road, Sutton Coldfield West Midlands (GB)**

(74) Representative: **Spall, Christopher John et al, BARKER, BRETTELL & DUNCAN 138 Hagley Road, Edgbaston Birmingham B16 9PW (GB)**

(54) **A pump for hydraulic fluid.**

(57) An hydraulic pump comprises a piston (10) which is reciprocable in a bore (19) in response to rotation of a drive to draw fluid from a reservoir (2) and into a pumping chamber (17), through a one-way valve (21), during an induction stroke, and to force fluid from the pumping chamber (17) to a supply (3) upon movement of the piston (10) in the opposite direction during a power stroke. A control chamber (18) is defined between one end of the bore (9) and the adjacent end of the piston (10) opposite the pumping chamber (17) and into which fluid is drawn from the reservoir (2), and through a second one-way valve (24), during the power stroke. Leakage from the control chamber (18) is controlled by a fixed orifice (19) such that movement of the piston (10) in the bore (9) during the induction stroke takes place substantially at a constant rate and during such movement the speed of the piston (10) is completely independent of the speed of the drive.

1

## A PUMP FOR HYDRAULIC FLUID

This invention relates to a new or improved pump for hydraulic fluid.

In some hydraulic systems, in particular hydraulically-operated anti-skid braking systems, it is desirable to provide an hydraulic pump of the type which is adapted to be driven from a braked wheel and during an operative range, once a predetermined minimum speed is attained, is adapted to produce a constant output flow irrespective of any increase in the speed.

Some hydraulic systems employ a pump which is driven from variable speed drive means, the speed at which varies over a relatively wide range, independently of the requirements of the hydraulic system. Often there is a requirement that the hydraulic system should be able to provide maximum design performance even when the pump is driven at a relatively low speed, and the size of the pump must be selected on this basis. One consequence of this situation is that energy is wasted when the pump is driven at higher speeds.

One example of such a system is a self-levelling hydraulic suspension system for a motor vehicle where the pump is usually driven from the engine or transmission, and the system is required to correct the ride height in a minimum time whilst the engine is idling.

Another example is an hydraulic power steering system of the 'open-centre' type for a motor vehicle in which the maximum performance is required during parking manoeuvres during which the engine is normally idling.

According to our invention in a pump for hydraulic fluid comprising a piston which is reciprocable in a bore to draw fluid from a reservoir and into a pumping chamber during an induction stroke, and to force fluid from the pumping chamber to a supply upon movement of the piston in the opposite direction during a power stroke, a control chamber is defined between one end of the bore and the adjacent end of the piston opposite the pumping chamber and into which fluid is drawn from a reservoir during the power stroke, and leakage from the control chamber is controlled such that movement of the piston in the bore during the induction stroke takes place substantially at a constant rate.

The piston is reciprocable in the bore in response to rotation of a drive and during the induction stroke the speed of the piston is completely independent of the speed of the drive.

Preferably the fluid is drawn into the pumping chamber through a first one-way valve during the induction stroke and into the control chamber through a second one-way valve during the power stroke.

The terms "induction" and "power" used herein refer to the pumping chamber and arranging for the piston to move at a controlled rate during the induction stroke provides the pump with a constant output flow at least once a predetermined speed of reciprocation has been attained.

Preferably the leakage from the control chamber is controlled by a fixed orifice.

The piston may be carried by a piston-rod which co-operates with the drive to reciprocate the piston during the power stroke, and biassing means is provided for urging the piston in the opposite direction towards the eccentric drive during the induction stroke.

In such a construction the biassing means has a low rate so that its loading remains substantially constant over the stroke of the piston.

Conveniently the biassing means comprises a compression spring.

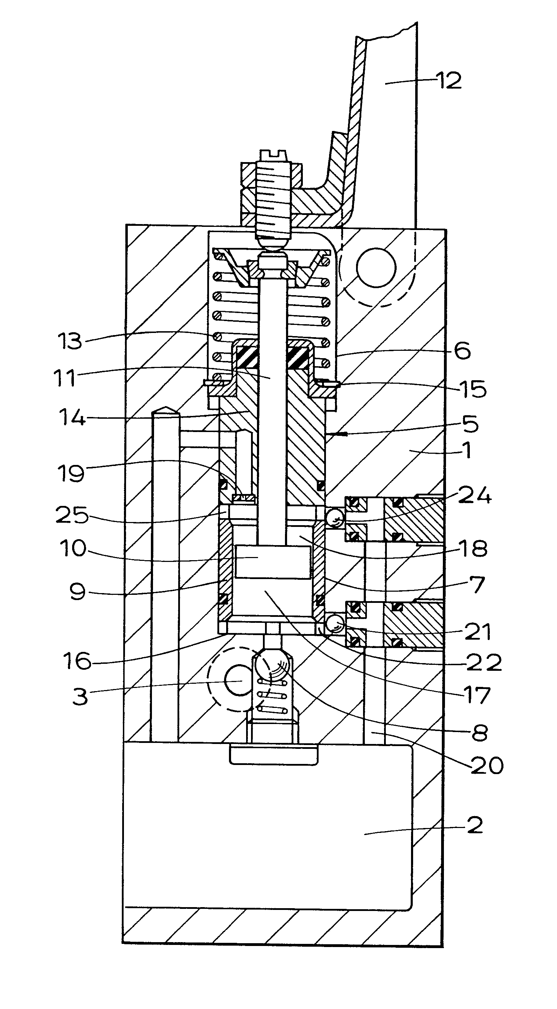

One embodiment of our invention is illustrated in the single Figure of the accompanying drawings which is a longitudinal section through a pump for hydraulic fluid.

The pump illustrated in the drawings comprises a housing 1 incorporating a reservoir 2 for hydraulic fluid, from which the pump draws fluid for delivery to an outlet port 3 for supplying services, for example a wheel brake.

The housing 1 has a longitudinal bore 5 of stepped outline having a bore portion 6 of greater area and a bore portion 7 of smaller area of which the end remote from the bore portion 6 leads to the outlet port 3 through a spring-loaded one-way valve 8, and houses a sleeve 9.

A piston 10 works in the bore of the sleeve 9 and the piston 10 is carried by a piston-rod 11 of which the free end is urged into engagement with a rocker arm 12 by means of a compression spring 13 acting between the piston-rod 11 and a plug 14 housed within the bore portion 7 and projecting into the bore portion 6. The plug 14 is held in a position by a circlip 15 and, in turn, the plug 14 holds the sleeve 9 in co-operation with a shoulder 16 at the end of the bore 5.

A pumping chamber 17 within the sleeve 9 and below the piston 10 communicates with the outlet port 3 through the one-way valve 8, and a control chamber 18 is provided in the sleeve 9, between the piston 10 and the inner end of the plug 14. The control chamber 18 communicates with the reservoir 2 through a fixed orifice 19 in the plug 14.

The rocker arm 12 co-operates with an eccentric drive (not shown) for example rotatable with a vehicle engine or transmission.

A blind passage 20 in the housing 1 is in communication at its lower, open, end with the reservoir 2. A first one-way valve 21 provides communication between the passage 20 and the lower end of the power chamber 17 through radial ports 22 in the sleeve 9, and a second one-way valve 24 provides communication between the passage 20 and the control chamber 18 through radial ports 25 in the upper end of the sleeve 9 which is in abutment with the plug 14.

During downward movement of the piston 10 from a b.d.c. position fluid from the reservoir 2 is drawn into the control chamber 18 through a one-way valve 24 and the ports 25 whilst, at the same time, fluid in the pumping chamber 17 is pumped during this power stroke to the outlet 3 through the one-way valve 8. During upward movement of the piston 10 in the opposite direction under the biassing force of the spring 13 fluid from the reservoir 2 is drawn, during an induction stroke, into the pumping chamber 17 through the one-way valve 21, and the ports 22.

The trapped fluid in the control chamber 18 is expelled at a rate determined by the orifice 19 which, in conjunction with the load in the spring 13, determines the rate at which the piston 10 can ascend with the rocker arm 12 and towards the drive During this movement of the piston 10 fluid is drawn into the pumping chamber 23 through the one-way valve 21 as described above, and the one-way valve 24 is closed.

We arrange for the spring 13 to have a low rate so that its loading will remain substantially constant over the stroke of the piston 10. The rate of ascent of the piston 10 will therefore also be substantially constant.

The delivery of the pump will depend upon the distance through which the piston 10 ascends before the eccentric drive has rotated through a sufficient angular distance to start urging the piston 10 downwards in the opposite direction against the load in the spring 13. The delivery of the pump is clearly independent of the speed of rotation of the drive driving the pump.

For $Q = W \times A \times S$ where $Q$ = flow rate

$A$ = area of the piston 10

$\overset{\circ}{S}$ = effective stroke of the piston 10

$W$ = rotational speed of the eccentric drive

$S = \dfrac{V}{W}$ where $V$ = the return speed of the piston 10.

Therefore $Q = A \times V$

Therefore $Q$ is independent of $W$.

6

Thus the pump produces a constant delivery independent of the rotational speed of the eccentric drive. This is because the effective stroke S of the piston 10 is reduced as the rotational speed W of the eccentric drive increases.

Where used herein the term "fixed orifice" includes any orifice of which the size can be adjusted during assembly or in service.

In a modified construction the pump may be of multi-cylinder construction with a common delivery gallery and a common reservoir for fluid.

CLAIMS

1.   A pump for hydraulic fluid comprising a piston (10) which is reciprocable in a bore (9) to draw fluid from a reservoir (2) and into a pumping chamber (17), during an induction stroke, and to force fluid from the pumping chamber (17) to supply services upon movement of the piston in the opposite direction during a power stroke, characterised in that a control chamber (18) is defined between one end of the bore (9) and the adjacent end of the piston (10) opposite the pumping chamber (17) and into which fluid is drawn from a reservoir (2) during the power stroke, and leakage from the control chamber (18) is controlled such that movement of the piston (10) in the bore (9) during the induction stroke takes place substantially at a constant rate.

2.   A pump as claimed in Claim 1, characterised in that the piston (10) is reciprocable in the bore (9) in response to rotation of a drive and during the induction stroke the speed of the piston (10) is completely independent of the speed of the drive.

3.   A pump as claimed in Claim 1 or Claim 2, characterised in that fluid is drawn into the pumping chamber (17) through a first one-way valve (21) during the induction stroke and into the control chamber through a second one-way valve (24) during the power stroke.

4.   A pump as claimed in any of Claims 1-3, characterised in that the leakage from the control chamber (18) is controlled by a fixed orifice (19).

5.   A pump as claimed in any preceding claim, characterised in that the piston (10) is carried by a piston-rod (11) which co-operates with the drive to reciprocate the piston (10) during the power stroke, and a biassing means (13) is provided for urging the piston (10) in the opposite direction towards the eccentric drive during the induction stroke.

6.   A pump as claimed in Claim 5, characterised in that the biassing means (13) has a low rate so that its loading remains substantially constant over the stroke of the piston (10).

7.   A pump as claimed in Claim 5 or Claim 6, characterised in that the biassing means (13) comprises a compression spring.